# EUROPÄISCHE PATENTSCHRIFT

(11) **EP 3 405 005 B1**
(45) Veröffentlichungstag und Bekanntmachung des Hinweises auf die Patenterteilung: **06.04.2022**
(21) Anmeldenummer: 18157910.3
(22) Anmeldetag: 21.02.2018
(51) Int. Cl.: H05B 6/70, H05B 6/68, H05B 6/64

(54) **VERFAHREN UND GARVORRICHTUNG ZUM GAREN VON GARGUT**
METHOD AND COOKING DEVICE FOR COOKING COOKED MATERIAL
PROCÉDÉ ET DISPOSITIF DE CUISSON DESTINÉS À CUIRE DES PRODUITS À CUIRE

(30) Priorität: 22.02.2017 DE 102017202881
(43) Veröffentlichungstag der Anmeldung: 21.11.2018
(73) Patentinhaber: E.G.O. Elektro-Gerätebau GmbH, 75038 Oberderdingen (DE)
(72) Erfinder: Bayer, Ewald, 72358 Dormettingen (DE); Frank, Marcus, 75038 Oberderdingen (DE); Schönemann, Konrad, 75056 Sulzfeld (DE)
(74) Vertreter: Patentanwälte Ruff, Wilhelm, Beier, Dauster & Partner mbB

(56) Entgegenhaltungen:
- EP-A1- 0 568 362
- EP-A1- 2 475 221
- WO-A1-2010/052723
- WO-A2-2007/103958
- DE-A1-102012 006 578
- DE-A1-102014 111 019
- US-A1- 2014 203 012

## Beschreibung

Die Erfindung betrifft ein Verfahren zum Garen von Gargut mittels einer Mehrzahl von Heizeinheiten sowie eine zugehörige Garvorrichtung, die zur Durchführung dieses Verfahrens ausgebildet ist.

Zum Garen von Gargut können unterschiedliche Heizeinheiten verwendet werden. Beispielsweise ist es bekannt, Heizeinheiten zu verwenden, welche mit Strahlungswärme, Konvektion bzw. Umluft, Dampf oder Mikrowellenstrahlung arbeiten. Dementsprechend können beispielsweise Grills, Umluftheizgeräte, Dampferzeuger oder Mikrowelleneinheiten verwendet werden.

Gerade bei Mikrowelleneinheiten hat es sich herausgestellt, dass diese vorteilhaft mit anderen Heizeinheiten kombiniert werden können, um ein Gargut in bestimmter Art und Weise zu garen. Allerdings hat es sich auch gezeigt, dass gerade in Privathaushalten typischerweise nicht genug Erfahrung und Wissen vorhanden sind, um die möglichen Vorteile tatsächlich zu realisieren. Dementsprechend bleiben diese in der Praxis häufig ungenutzt.

Aus der DE 10 2014 111 019 A1 ist ein Verfahren zum Garen von Gargut bekannt, wobei ein dieses Verfahren verwendendes Haushaltsgerät ein Messsystem umfasst. Dieses ist zur berührungslosen Ermittlung einer charakteristischen Kenngröße eines Garguts in dem Haushaltsgerät ausgebildet. Mittels elektromagnetischer Messstrahlung kann eine Welleneigenschaft einer vom Gargut zurückgeworfenen Strahlung erfasst werden. Damit können Form, Kontur, Volumen, Feuchtegehalt und/oder Dichteeigenschaften des Garguts erfasst werden, möglicherweise auch Temperatur, Materialeigenschaften, Aggregatzustand, stoffliche Zusammensetzung oder Konsistenz.

Aus der DE 10 2012 006 578 A1 ist ein weiteres Gargerät bekannt, bei dem mittels einer Hochfrequenzstrahlungsquelle ein Gargut sozusagen abgetastet wird. Mittels einer Erfassungsvorrichtung kann vom Gargut reflektierte Hochfrequenzstrahlung empfangen und diese dann wiederum von einer Steuerung ausgewertet werden. So können charakteristische Parameter des Garguts erkannt werden, um ein im Hausgerät ablaufendes Garprogramm anpassen zu können.

Aus der WO 2007/103958 A2 ist ein nochmals weiteres Gargerät bekannt, das einen Heißluftofen, einen Dampfgarer und eine Mikrowelle aufweist. Anhand einer Eingabe der Masse des Garguts kann ein Leistungsniveau für die Mikrowellenerwärmung während eines Garprogramms bestimmt werden. Die Verwendung des Garens mittels Mikrowellen dient dazu, dass eine vorgegebene Endzeit eines Garprogramms eingehalten werden kann, unabhängig von einer Masse des Garguts. Hierzu wird eben die Masse des Garguts per se benötigt.

Aus der EP 568362 A1 ist es bekannt, in einem Mikrowellenofen einen Mikrowellengenerator bzw. ein Magnetron mit Kühlluft zu kühlen während des Betriebs. Daraus kann mittels Temperaturmessung eine Temperatur des Garguts bzw. im Ofen erkannt werden.

Aus der US 2014/0203012 A1 ist ein Gargerät als Mikrowellenofen bekannt, bei dem im Garraum eine Kamera enthalten ist, die darin enthaltenes Gargut optisch erfasst und auswertet. Dadurch wird die Größe bzw. das Volumen des Garguts ermittelt. Durch Eingeben der Art des Garguts ist dem Gargut die spezifische Masse des Garguts zumindest in etwa bekannt, und aufgrund der optisch erfassten Größe kann dann die Masse bzw. das Gewicht des Garguts berechnet werden.

Aus der WO 2010/052723 A1 ist es bekannt, für einen Mikrowellenofen, durch Verwendung verschiedener Frequenzen für die Mikrowellen, zu versuchen, eine Energieverteilung im Gargut zu ermitteln. Insbesondere kann von dem Gargut reflektierte Mikrowellenstrahlung dazu erfasst werden.

Aus der EP 2 475 221 A1 ist ein Mikrowellenofen bekannt mit mindestens einem Mikrowellengenerator und mehreren Mikrowellen-Detektoren. Dabei wird eine Frequenz der Mikrowellen variiert und eine Antwort auf die Mikrowelleneinstrahlung erfasst. Damit kann für ein jeweiliges Gargut eine optimale Anpassung der Erwärmung erreicht werden.

### Aufgabe und Lösung

Der Erfindung liegt die Aufgabe zugrunde, ein Verfahren und eine Garvorrichtung zum Garen von Gargut mittels einer Mehrzahl von Heizeinheiten zu schaffen, mit denen Probleme des Standes der Technik vermieden werden können, und es insbesondere möglich ist, Gargut optimal zuzubereiten.

Gelöst wird diese Aufgabe durch ein Verfahren mit den Merkmalen des Anspruchs 1 sowie eine Garvorrichtung mit den Merkmalen des Anspruchs 13. Vorteilhafte sowie bevorzugte Ausgestaltungen der Erfindung sind Gegenstand der weiteren Ansprüche und werden im Folgenden näher erläutert. Dabei werden manche der genannten Merkmale nur für das Verfahren oder nur für die Garvorrichtung genannt. Sie sollen jedoch unabhängig davon sowohl für das Verfahren als auch für die Garvorrichtung selbstständig und unabhängig voneinander gelten können. Der Wortlaut der Ansprüche wird durch ausdrückliche Bezugnahme zum Inhalt der Beschreibung gemacht.

Bei dem Verfahren wird Gargut mittels einer Mehrzahl von Heizeinheiten gegart, vorzugsweise in einer Garanordnung. Zumindest eine dieser Heizeinheiten ist eine Mikrowelleneinheit. Das Verfahren weist folgende Schritte auf:
- Ermitteln einer spezifischen Masse des Garguts mittels der Mikrowelleneinheit, wobei die spezifische Masse des Garguts als Verhältnis von thermischer Masse des Garguts zu Oberfläche des Garguts definiert ist,
- Bestimmen einer Anzahl von Parametern der Heizeinheiten basierend auf der spezifischen Masse, und
- Garen des Garguts mittels der Heizeinheiten unter Verwendung der Parameter.

Mittels des erfindungsgemäßen Verfahrens ist es möglich, automatisiert die Vorteile der unterschiedlichen Heizeinheiten zu kombinieren. Es wurde hierbei erkannt, dass die spezifische Masse des Garguts ein sehr guter Indikator dafür ist, wie die unterschiedlichen Heizeinheiten bestmöglich kombiniert werden sollen, um das optimale Garergebnis zu erzielen. Die Parameter der Heizeinheiten können somit besonders vorteilhaft abhängig von der spezifischen Masse eingestellt werden. Im Übrigen wurde erkannt, dass sich die spezifische Masse zuverlässig mittels der ohnehin vorhandenen Mikrowelleneinheit bestimmen lässt. Unter Umständen kann auch in etwa die Lage des Garguts innerhalb der Garvorrichtung bestimmt werden, so dass der Leistungseintrag an dessen Ort optimiert werden kann.

Hierbei wird unter einer Mikrowelleneinheit eine Einheit bzw. eine Vorrichtung verstanden, welche Mikrowellen zum Erwärmen des Garguts abstrahlt. Da vorliegend eine Mehrzahl von Heizeinheiten verwendet wird, sind zumindest zwei Heizeinheiten vorhanden. Es kann jedoch auch eine beliebig höhere Anzahl von Heizeinheiten verwendet werden. Beispielsweise können drei, vier oder fünf Heizeinheiten verwendet werden. Diese können insbesondere alle jeweils unterschiedlich ausgebildet sein. Es können jedoch auch zwei oder auch mehrere gleiche Heizeinheiten verwendet werden. Im Übrigen ist vorteilhaft vorgesehen, dass zumindest eine der Heizeinheiten keine Mikrowelleneinheit, sondern eine anders ausgebildete Heizeinheit ist.

Bei der thermischen Masse handelt es sich erfindungsgemäß um die Wärmekapazität.

Gemäß einer Ausführung wird die spezifische Masse des Garguts während Abstrahlung von Mikrowellen durch die Mikrowelleneinheit anhand von reflektierter Mikrowellenstrahlung ermittelt. Es hat sich gezeigt, dass ein solches Vorgehen ein zuverlässiges Maß für die spezifische Masse des Garguts ergibt. Es können zum Ermitteln der spezifischen Masse mittels der Mikrowelleneinheit insbesondere Mikrowellen unterschiedlicher Frequenz, Phase und/oder Leistung abgestrahlt werden. Diese können insbesondere im Rahmen eines Scans in Abhängigkeit von der Zeit variiert werden. Ein solcher Vorgang kann insbesondere vor dem Beginn oder beim Beginn des Garens durchgeführt werden, um die spezifische Masse zu ermitteln oder ein diese anzeigendes Maß zu ermitteln.

Als Mikrowelleneinheit kann insbesondere eine Halbleiter-Mikrowelleneinheit verwendet werden. Es hat sich gezeigt, dass derartige Halbleiter-Mikrowelleneinheiten besonders variabel sind, was die abgestrahlte Frequenz, Phase und Leistung angeht. Dementsprechend ermöglichen sie besonders zahlreiche Optionen, welche in Kombination mit der erfindungsgemäß wie beschrieben vorgesehenen automatisierten Bestimmung von Parametern besonders vorteilhaft ist.

Gemäß einer bevorzugten Ausführung wird ein Parameter einer Leistung der Mikrowelleneinheit umso höher bestimmt, je höher die spezifische Masse ist. Dies trägt der Tatsache Rechnung, dass ein Gargut mit hoher spezifischer Masse typischerweise voluminös ist, d.h. insbesondere im Vergleich zu seiner Oberfläche eine große thermische Masse aufweist. Beispielsweise kann es sich bei derartigen Gargütern um einen Braten oder ein Brot handeln. Da bei derartigen Gargütern typischerweise Bereiche vorhanden sind, welche innenliegen und weit von der Oberfläche entfernt sind, kommt hier besonders der Vorteil einer Mikrowellenbeheizung zum Tragen. Dieser Vorteil besteht insbesondere darin, dass Mikrowellen als einzige Beheizungsart nicht nur an der Oberfläche Energie abgeben, sondern auch in das Gargut eindringen, beispielsweise mit Tiefen von 1cm bis 5cm bei einer Mikrowellenfrequenz von 2,4 GHz.

Gemäß einer weiteren Ausführung ist zumindest eine Heizeinheit eine sogenannte oberflächenbeheizende Heizeinrichtung. Bei einer solchen oberflächenbeheizenden Heizeinrichtung kann es sich beispielsweise um eine Strahlungsheizeinrichtung, insbesondere einen Grill, um eine Konvektionsheizeinrichtung bzw. Umluftheizeinrichtung, oder um eine Dampfheizeinrichtung handeln. Derartige Heizeinrichtungen können besonders vorteilhaft mit der ohnehin verwendeten Mikrowelleneinheit kombiniert werden.

Gemäß einer bevorzugten Ausführung wird ein Parameter einer Leistung der oberflächenbeheizenden Heizeinrichtung umso niedriger bestimmt, je höher die spezifische Masse ist. Wie bereits erwähnt, wird bei Gargütern mit hoher spezifischer Masse besonders bevorzugt ein höherer Anteil der Heizleistung durch die Mikrowelleneinheit erbracht, da Mikrowellen weiter eindringen und somit eine Überhitzung bzw. ein Verbrennen der Oberfläche vermieden werden kann.

Es sei erwähnt, dass umgekehrt bei einem Gargut mit niedriger spezifischer Masse vorteilhaft ein Parameter einer Leistung der oberflächenbeheizenden Heizeinrichtung entsprechend höher bestimmt wird und/oder ein Parameter einer Leistung der Mikrowelleneinheit entsprechend niedriger bestimmt wird. Bei derartigen Gargütern kann es sich beispielsweise um flache Gargüter wie eine Pizza handeln. Bei diesen kommt der Vorteil von Mikrowellen, dass diese besonders tief eindringen, nicht zum Tragen. Sie können besser über eine Strahlungsheizeinrichtung oder eine andere oberflächenbeheizende Heizeinrichtung beheizt werden.

Gemäß einer Weiterbildung wird ein Gargut, insbesondere ein Gargut mit hoher spezifischer Masse, am Ende des Garens mittels der oberflächenbeheizenden Heizeinrichtung gebräunt. Ein Gargut mit hoher spezifischer Masse kann beispielsweise dadurch definiert sein, dass die spezifische Masse über einem vorgegebenen Schwellenwert liegt. Das Bräunen kann beispielsweise für eine Dauer von 1 bis 5 Minuten durchgeführt werden. Hierdurch kann ein Gargut mit hoher spezifischer Masse, beispielsweise ein Braten, zunächst langsam mittels Mikrowellen gleichmäßig, also auch innenliegend, erwärmt werden. Zum Abschluss kann durch den eben beschriebenen Vorgang eine Maillard-Reaktion an der Oberfläche ausgelöst werden, um das Gargut definiert zu bräunen. Damit können optisch und geschmacklich gewünschte Krusten am Gargut entstehen.

Das Gargut kann sequenziell und/oder parallel mittels mehrerer Heizeinheiten gegart werden. Die Parameter der Heizeinheiten können als zeitabhängige Parameter bestimmt werden. Damit kann der Garvorgang zeitlich variiert werden. Beispielsweise können zu Beginn des Garvorgangs andere Heizeinheiten als am Ende des Garvorgangs verwendet werden. Auch andere Parameter wie Leistung, Frequenz oder Phase bei Mikrowelleneinheiten oder beispielsweise Leistung, Dampfmenge oder Ventilatorstufen bei anderen Heizeinheiten können entsprechend zeitabhängig variiert werden.

Somit können erfindungsgemäß nicht nur die Intensität der Mikrowellenbeheizung und der konventionellen Beheizung, sondern auch deren Einwirkungsdauer in Abhängigkeit von der spezifischen Masse variiert werden.

Gemäß einer Weiterbildung werden zusätzlich zur spezifischen Masse eine Anzahl von weiteren Eigenschaften des Garguts ermittelt, wobei insbesondere eine dieser weiteren Eigenschaften eine Art des Garguts sein kann. Die Parameter der Heizeinheiten werden dann bevorzugt auch basierend auf den weiteren Eigenschaften ermittelt. Damit kann beispielsweise die Art des Garguts, d.h. insbesondere die chemische Zusammensetzung, bei der Ermittlung der Parameter berücksichtigt werden. Beispielsweise kann ein Braten anders gegart werden als ein Brot, obwohl beide eine ähnliche oder sogar identische Form haben können. Weiteren Eigenschaften können vorzugsweise mittels Sensoren, einer Anzahl von Kameras und/oder mittels Benutzereingabe bestimmt werden.

Andere mögliche Eigenschaften außer der Art des Garguts, welche hier vorteilhaft verwendet werden können, sind beispielsweise eine Masse, ein Feuchtegehalt oder eine gewünschte Endbeschaffenheit des Garguts.

Die mehreren Parameter der Heizeinheiten können insbesondere aus folgender Gruppe ausgewählt sein:
- mittlere Leistung,
- Temperatur,
- Einschaltdauer,
- Frequenz,
- Phasenlage,
- Feuchtemenge.

Derartige Parameter haben sich für typische Anwendungen bewährt.

Gemäß einer bevorzugten Ausführung werden während des Garens Eigenschaften des Garguts bestimmt oder berechnet und auf einem Benutzerinterface als Garverlauf angezeigt. Dabei kann es sich beispielsweise um eine Temperatur des Garguts oder um einen Bräunungsgrad handeln. Dies erlaubt einem Benutzer eine Überwachung des Garverlaufs, so dass er unter Umständen manuell eingreifen kann.

Es sei darauf hingewiesen, dass die Eigenschaften, einschließlich der spezifischen Masse, sowohl als einheitenbehaftete Absolutwerte als auch als die jeweilige Eigenschaft charakterisierende dimensionslose Größen angegeben sein können. Die hier beschriebene Ausführung umfasst beide möglichen oder auch andere denkbare Implementierungen.

Die Erfindung betrifft des Weiteren eine Garvorrichtung bzw. ein Elektrogargerät. Die Garvorrichtung weist eine Kavität zur Aufnahme eines Garguts auf. Sie weist eine Mehrzahl von Heizeinheiten zum Beheizen eines in der Kavität befindlichen Garguts auf, wobei zumindest eine Heizeinheit eine Mikrowelleneinheit ist. Außerdem weist die Garvorrichtung eine Steuerungseinheit auf, welche dazu konfiguriert ist, ein vorbeschriebenes erfindungsgemäßes Verfahren auszuführen.

Mittels der erfindungsgemäßen Garvorrichtung kann das erfindungsgemäße Verfahren besonders vorteilhaft umgesetzt werden. Insbesondere können die bereits beschriebenen Vorteile erreicht werden. Hinsichtlich des erfindungsgemäßen Verfahrens kann auf alle zuvor beschriebenen Ausführungen und Varianten zurückgegriffen werden.

Die Unterteilung der Anmeldung in einzelne Abschnitte sowie Zwischen-Überschriften beschränken die unter diesen gemachten Aussagen nicht in ihrer Allgemeingültigkeit.

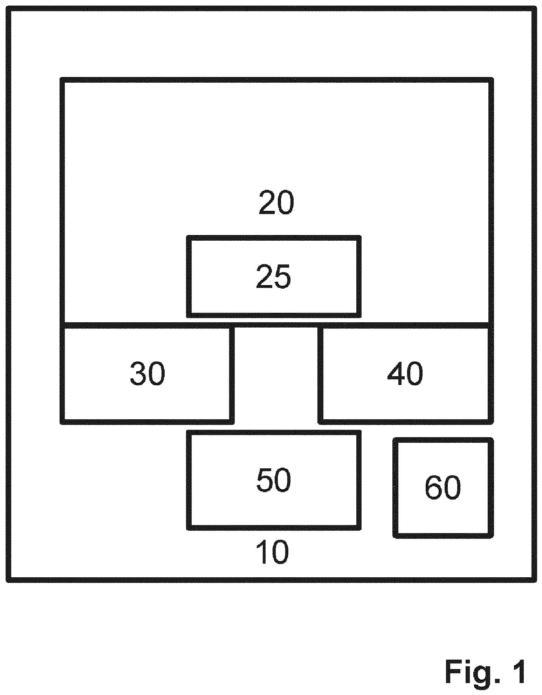

Weitere Merkmale und Vorteile kann der Fachmann dem nachfolgend mit Bezug auf die beigefügte Zeichnung beschriebenen Ausführungsbeispiel entnehmen. Dabei zeigt die Fig. 1 schematisch eine Garvorrichtung 10 als Mikrowellengerät gemäß einem Ausführungsbeispiel der Erfindung.

### Detaillierte Beschreibung des Ausführungsbeispiels

Fig. 1 zeigt schematisch eine Garvorrichtung 10 gemäß einem Ausführungsbeispiel der Erfindung als Elektrogargerät bzw. als Mikrowellengerät. Diese Garvorrichtung 10 ist dazu ausgebildet, ein erfindungsgemäßes Verfahren gemäß einem Ausführungsbeispiel auszuführen. Die Garvorrichtung 10 weist eine Kavität 20 auf. Diese ist dazu ausgebildet, ein Gargut 25 wie beispielsweise einen Braten, ein Brot oder eine Pizza aufzunehmen. Hierbei sollen grundsätzlich alle zum Erwärmen geeigneten Lebensmittel oder auch andere Gargüter wie beispielsweise wärmende bzw. wärmespeichernde Substanzen in die Kavität 20 erwärmt werden können.

Die Garvorrichtung 10 weist des Weiteren zwei Heizeinheiten auf, nämlich eine Mikrowelleneinheit 30 und eine Konvektionsheizeinrichtung 40. Die Mikrowelleneinheit 30 ist dazu ausgebildet, Mikrowellen zum Erwärmen des Garguts 25 in die Kavität 20 abzustrahlen und auch reflektierte Mikrowellen aus der Kavität 20 zu messen. Die Konvektionsheizeinrichtung 40 ist dazu ausgebildet, heiße Luft in die Kavität 20 zu blasen, vorteilhaft als bekannter Umluftbetrieb. Somit stehen zwei grundsätzlich unterschiedliche Heizmethoden zur Verfügung. Es sei verstanden, dass grundsätzlich auch weitere Heizeinheiten verwendet werden können oder dass die Konvektionsheizeinrichtung 40 durch eine andere Heizeinheit wie beispielsweise einen Grill ausgetauscht werden kann. Die hier mit Bezug auf Fig. 1 beschriebene Konfiguration stellt lediglich eine beispielhafte Ausführung dar.

Außerdem weist die Garvorrichtung 10 eine Steuerungseinheit 50 auf. Hierbei handelt es sich um eine programmierbare, elektronische Steuerungseinheit 50. Diese ist dazu konfiguriert, mittels der beiden Heizeinheiten 30, 40 ein erfindungsgemäßes Verfahren auszuführen. Hierzu wird zunächst beim Beginn eines Garvorgangs, also nach Starten durch einen Benutzer, grundsätzlich eine Art Scan mittels der Mikrowelleneinheit 30 durchgeführt, bei welchem zeitlich versetzt Mikrowellen mit unterschiedlichen Frequenzen in die Kavität 20 abgegeben und reflektierte Mikrowellen gemessen werden als Voruntersuchung. Diese Voruntersuchung kann allgemein schnell gehen, beispielsweise weniger als 10 Sekunden dauern, vorteilhaft weniger als 5 Sekunden. Anhand der reflektierten Mikrowellen, welche von der Mikrowelleneinheit 30 an die Steuerungseinheit 50 gemeldet werden, kann die Steuerungseinheit 50 erkennen, wie hoch die spezifische Masse des Garguts 25 ist. Insbesondere kann zusätzlich erkannt werden, ob es sich um ein voluminöses Gargut wie beispielsweise einen Braten oder ein Brot handelt, in diesem Fall liegt eine hohe spezifische Masse vor, oder ob es sich um ein flaches Gargut wie beispielsweise eine Pizza handelt, in diesem Fall liegt eine kleine spezifische Masse vor.

Anhand der spezifischen Masse bestimmt die Steuerungseinheit 50 Parameter der Heizeinheiten 30, 40. Hierzu werden insbesondere die jeweiligen Leistungen festgelegt. Im Fall eines Garguts 25 mit hoher spezifischer Masse wird die Leistung der Mikrowelleneinheit 30 hoch eingestellt, wohingegen die Leistung der Konvektionsheizeinrichtung 40 geringer eingestellt wird. Dies führt dazu, dass das Gargut 25 überwiegend mit Mikrowellen beheizt wird, welche das Gargut nicht nur an der Oberfläche, sondern vor allem im Inneren beheizen und somit für einen gleichmäßigeren, die Oberfläche weniger belastenden Garvorgang sorgen. Soll zum Ende des Garvorgangs eine besondere Bräunung erzielt werden, kann die Leistung der Konvektionsheizeinrichtung 40 zum Ende des Garvorgangs für einige Minuten deutlich erhöht werden, um eine Maillard-Reaktion zum Bräunen zu bewirken.

Liegt demgegenüber ein Gargut mit einer geringen spezifischen Masse vor, so wird die Leistung der Mikrowelleneinheit 30 geringer und die Leistung der Konvektionsheizeinrichtung 40 höher eingestellt. Das Gargut 25 wird also in diesem Fall überwiegend durch Konvektion erwärmt, da die Mikrowellen in diesem Fall nicht den beschriebenen Vorteil ausspielen können.

Bei der hier verwendeten Mikrowelleneinheit 30 handelt es sich insbesondere um eine Halbleiter-Mikrowelleneinheit 30, welche eine erheblich größere Flexibilität bietet als ein konventionelles Magnetron. Die Garvorrichtung 10 weist weiter ein Benutzerinterface 60 auf, auf welchem ein Benutzer sie steuern kann und Informationen über ihre Funktion sowie über den Garverlauf erhalten kann. Hierzu berechnet insbesondere die Steuerungseinheit 50 eine Temperatur des Garguts 25 und zeigt diese auf dem Benutzerinterface 60 an. Des Weiteren wird die ermittelte spezifische Masse auf dem Benutzerinterface 60 angezeigt, so dass der Benutzer erkennen kann, ob eine korrekte Form des Garguts erkannt wurde. Dabei kann eine Korrektur einer falschen Erkennung durch einen Benutzer vorgenommen werden.

Durch die hier beschriebene Garvorrichtung 10 werden die Vorteile von Mikrowellen mit den Vorteilen weiterer Heizeinrichtungen in besonders benutzerfreundlicher Weise kombiniert, da ein Benutzer nicht selbst aktiv werden muss, um die am besten geeignete Kombination der Heizarten auszuwählen. Dies geschieht vielmehr vollautomatisch und ist somit auch für Laien leicht verwendbar.

## Patentansprüche

1. Verfahren zum Garen von Gargut (25) mittels einer Mehrzahl von Heizeinheiten (30, 40), wobei zumindest eine Heizeinheit (30, 40) eine Mikrowelleneinheit (30) ist, wobei das Verfahren folgende Schritte aufweist:
- Ermitteln einer spezifischen Masse des Garguts (25) mittels der Mikrowelleneinheit, wobei die spezifische Masse des Garguts (25) als Verhältnis von thermischer Masse des Garguts (25) zu Oberfläche des Garguts (25) definiert ist, wobei die thermische Masse des Garguts (25) die Wärmekapazität des Garguts (25) ist,
- Bestimmen einer Anzahl von Parametern der Heizeinheiten (30, 40) basierend auf der spezifischen Masse, und
- Garen des Garguts (25) mittels der Heizeinheiten (30, 40) unter Verwendung der bestimmten Parameter.

2. Verfahren nach Anspruch 1, **dadurch gekennzeichnet, dass** die spezifische Masse des Garguts (25) während Abstrahlung von Mikrowellen durch die Mikrowelleneinheit (30) anhand von reflektierter Mikrowellenstrahlung ermittelt wird.

3. Verfahren nach Anspruch 1 oder 2, **dadurch gekennzeichnet, dass** zum Ermitteln der spezifischen Masse des Garguts (25) mittels der Mikrowelleneinheit (30) Mikrowellen unterschiedlicher Frequenz, Phase und/oder Leistung abgestrahlt werden, wobei vorzugsweise ein Frequenzbereich durchfahren wird.

4. Verfahren nach einem der vorhergehenden Ansprüche, **dadurch gekennzeichnet, dass** als Mikrowelleneinheit (30) eine Halbleiter-Mikrowelleneinheit verwendet wird.

5. Verfahren nach einem der vorhergehenden Ansprüche, **dadurch gekennzeichnet, dass** ein Parameter einer Leistung der Mikrowelleneinheit (30) umso höher bestimmt wird, je höher die spezifische Masse des Garguts (25) ist.

6. Verfahren nach einem der vorhergehenden Ansprüche, **dadurch gekennzeichnet, dass** zumindest eine Heizeinheit (30, 40) eine oberflächenbeheizende Heizeinrichtung (40) ist, wobei vorzugsweise die oberflächenbeheizende Heizeinrichtung (40) ausgewählt ist aus der Gruppe Strahlungsheizeinrichtung, insbesondere ein Grill, Konvektionsheizeinrichtung (40) oder Dampfheizeinrichtung.

7. Verfahren nach Anspruch 6, **dadurch gekennzeichnet, dass** ein Parameter einer Leistung der oberflächenbeheizenden Heizeinrichtung (40) umso niedriger bestimmt wird, je höher die spezifische Masse des Garguts (25) ist.

8. Verfahren nach Anspruch 6 oder 7, **dadurch gekennzeichnet, dass** ein Gargut (25) mit hoher spezifischer Masse, insbesondere mit einer spezifischen Masse über einem Schwellenwert, am Ende des Garens mittels der oberflächenbeheizenden Heizeinrichtung (40) gebräunt wird, vorzugsweise für eine Dauer von 1 bis 5 Minuten.

9. Verfahren nach einem der vorhergehenden Ansprüche, **dadurch gekennzeichnet, dass** das Gargut (25) sequenziell und/oder parallel mittels mehrerer Heizeinheiten (30, 40) gegart wird und/oder die Parameter der Heizeinheiten (30, 40) als zeitabhängige Parameter bestimmt werden.

10. Verfahren nach einem der vorhergehenden Ansprüche, **dadurch gekennzeichnet, dass**
- zusätzlich zur spezifischen Masse des Garguts (25) eine Anzahl von weiteren Eigenschaften des Garguts (25) ermittelt werden, wobei insbesondere eine weitere Eigenschaft eine Art des Garguts (25) ist,
- wobei die Parameter der Heizeinheiten (30, 40) auch basierend auf den weiteren Eigenschaften ermittelt werden,
- wobei vorzugsweise eine Anzahl der weiteren Eigenschaften mittels Sensoren, einer Anzahl von Kameras, und/oder mittels Benutzereingabe bestimmt werden.

11. Verfahren nach einem der vorhergehenden Ansprüche, **dadurch gekennzeichnet, dass** ein Parameter der Heizeinheiten (30, 40) aus folgender Gruppe ausgewählt ist:
- Mittlere Leistung,
- Temperatur,
- Einschaltdauer,
- Frequenz,
- Phasenlage,
- Feuchtemenge.

12. Verfahren nach einem der vorhergehenden Ansprüche, **dadurch gekennzeichnet, dass** während des Garens Eigenschaften des Garguts (25) bestimmt oder berechnet werden, wobei sie vorzugsweise auf einem Benutzerinterface (60) als Garverlauf angezeigt werden.

13. Garvorrichtung (10), welche folgendes aufweist:
- eine Kavität (20) zur Aufnahme eines Garguts (25),
- eine Mehrzahl von Heizeinheiten (30, 40) zum Beheizen des in der Kavität (20) befindlichen Garguts (25), wobei zumindest eine Heizeinheit (30, 40) eine Mikrowelleneinheit (30) ist, und
- eine Steuerungseinheit (50), welche dazu konfiguriert ist, ein Verfahren nach einem der vorhergehenden Ansprüche auszuführen.

## Claims

1. Method for cooking product to be cooked (25) by means of a plurality of heating units (30, 40), wherein at least one heating unit (30, 40) is a microwave unit (30), the method comprising the following steps:
- identifying a specific mass of the product to be cooked (25) by means of the microwave unit, wherein the specific mass of the product to be cooked (25) is defined as a ratio between thermal mass of the product to be cooked (25) and surface of the product to be cooked (25), wherein the thermal mass of the product to be cooked (25) is the thermal capacity of the product to be cooked (25),
- determining a number of parameters of the heating units (30, 40) based on the specific mass, and
- cooking the product to be cooked (25) by means of the heating units (30, 40) using the determined parameters.

2. Method according to claim 1, **characterized in that** the specific mass of the product to be cooked (25) is identified during radiation of microwaves by the microwave unit (30) with the aid of reflected microwave radiation.

3. Method according to claim 1 or 2, **characterized in that** for identifying the specific mass of the product to be cooked (25) by means of the microwave unit (30), microwaves having different frequency, phase and/or power are radiated, wherein preferably a frequency range is passed through.

4. Method according to any of the preceding claims, **characterized in that** a semiconductor microwave unit is used as the microwave unit (30).

5. Method according to any of the preceding claims, **characterized in that** a parameter of a power of the microwave unit (30) is determined to be the higher the greater the specific mass of the product to be cooked (25) is.

6. Method according to any of the preceding claims, **characterized in that** at least one heating unit (30, 40) is a surface-heating heating unit (40), wherein preferably the surface-heating heating unit (40) is selected from the group of radiant heating device, in particular a grill, convection heating device (40), or a steam heating device.

7. Method according to claim 6, **characterized in that** a parameter of a power of the surface-heating heating unit (40) is determined to be the lower the greater the specific mass of the product to be cooked (25) is.

8. Method according to claim 6 or 7, **characterized in that** a product to be cooked (25) having a high specific mass, in particular having a specific mass exceeding a threshold value, is browned at the end of the cooking by means of the surface-heating heating unit (40), preferably for a period of 1 to 5 minutes.

9. Method according to any of the preceding claims, **characterized in that** the product to be cooked (25) is cooked sequentially and/or simultaneously by means of multiple heating units (30, 40), and/or the parameters of the heating units (30, 40) are determined to be time-dependent parameters.

10. Method according to any of the preceding claims, **characterized in that**
- in addition to the specific mass of the product to be cooked (25) a number of further characteristics of the product to be cooked (25) are identified, wherein in particular a further characteristic is a type of product to be cooked (25),
- wherein the parameters of the heating units (30, 40) are also identified based on the further characteristics,
- wherein preferably a number of the further characteristics are determined by means of sensors, a number of cameras, and/or by means of user input.

11. Method according to any of the preceding claims, **characterized in that** a parameter of the heating units (30, 40) is selected from the group of:
- average power,
- temperature,
- duty cycle,
- frequency,
- phase position,
- amount of humidity.

12. Method according to any of the preceding claims, **characterized in that**, during the cooking procedure, characteristics of the product to be cooked (25) are determined or calculated, wherein they are preferably indicated on a user interface (60) as a course of the cooking process.

13. Cooking device (10), comprising the following:
- a cavity (20) for accommodating a product to be cooked (25),
- a plurality of heating units (30, 40) for heating the product to be cooked (25) present within the cavity (20), wherein at least one heating unit (30, 40) is a microwave unit (30), and
- a controller (50) which is configured to carry out a method according to any of the preceding claims.

## Revendications

1. Procédé de cuisson d'un produit à cuire (25) au moyen d'une pluralité d'unités de chauffage (30, 40), dans lequel au moins une unité de chauffage (30, 40) est sous forme d'une unité à micro-ondes (30), le procédé comprenant les étapes suivantes :
- identifier une masse spécifique du produit à cuire (25) au moyen de l'unité à micro-ondes, dans lequel la masse spécifique du produit à cuire (25) est définie comme rapport de masse thermique du produit à cuire (25) à surface du produit à cuire (25), dans lequel la masse thermique du produit à cuire (25) est la capacité thermique du produit à cuire (25),
- déterminer un nombre de paramètres des unités de chauffage (30, 40) sur la base de la masse spécifique, et
- cuire le produit à cuire (25) au moyen des unités de chauffage (30, 40) en utilisant les paramètres déterminés.

2. Procédé selon la revendication 1, **caractérisé en ce que** la masse spécifique du produit à cuire (25) est identifiée pendant un rayonnement de micro-ondes par l'unité à micro-ondes (30) au moyen de rayonnement de micro-ondes réfléchi.

3. Procédé selon la revendication 1 ou 2, **caractérisé en ce que** pour identifier la masse spécifique du produit à cuire (25) au moyen de l'unité à micro-ondes (30) des micro-ondes de fréquence, phase et/ou puissance différente sont rayonnées, de préférence une plage de fréquence étant traversée.

4. Procédé selon l'une quelconque des revendications précédentes, **caractérisé en ce qu'**une unité à micro-ondes semi-conducteur est utilisée en tant que l'unité à micro-ondes (30).

5. Procédé selon l'une quelconque des revendications précédentes, **caractérisé en ce qu'**un paramètre d'une puissance de l'unité à micro-ondes (30) est déterminé d'autant plus élevé, plus la masse spécifique du produit à cuire (25) est élevée.

6. Procédé selon l'une quelconque des revendications précédentes, **caractérisé en ce que** au moins une unité de chauffage (30, 40) est sous forme de dispositif de chauffage (40) chauffant la surface, dans lequel de préférence le dispositif de chauffage (40) chauffant la surface est choisi dans le groupe de dispositif de chauffage radiant, en particulier un grill, dispositif de chauffage par convection (40) ou dispositif de chauffage vapeur.

7. Procédé selon la revendication 6, **caractérisé en ce qu'**un paramètre d'une puissance du dispositif de chauffage (40) chauffant la surface est déterminé d'autant plus bas, plus la masse spécifique du produit à cuire (25) est élevée.

8. Procédé selon la revendication 6 ou 7, **caractérisé en ce qu'**un produit à cuire (25) de masse spécifique élevée, en particulier d'une masse spécifique supérieure à une valeur seuil, est doré vers la fin de cuisson au moyen du dispositif de chauffage (40) chauffant la surface, de préférence pendant une durée de 1 à 5 minutes.

9. Procédé selon l'une quelconque des revendications précédentes, **caractérisé en ce que** le produit à cuire (25) est cuit séquentiellement et/ou simultanément au moyen de plusieurs unités de chauffage (30, 40) et/ou les paramètres des unités de chauffage (30, 40) sont déterminés en tant que paramètres temporels.

10. Procédé selon l'une quelconque des revendications précédentes, **caractérisé en ce que**
- supplémentaire à la masse spécifique du produit à cuire (25) un nombre d'autres caractéristiques du produit à cuire (25) sont identifiées, dans lequel en particulier une autre caractéristique est un type de produit à cuire (25),
- dans lequel les paramètres des unités de chauffage (30, 40) sont aussi identifiés sur la base des autres caractéristiques,
- dans lequel de préférence un nombre d'autres caractéristiques sont déterminés au moyen de capteurs, un nombre de caméras et/ou au moyen d'entrée utilisateur.

11. Procédé selon l'une quelconque des revendications précédentes, **caractérisé en ce qu'**un paramètre des unités de chauffage (30, 40) est choisi dans le groupe suivant :
- puissance moyenne,
- température,
- cycle de travail,
- fréquence,
- position de phase,
- quantité d'humidité.

12. Procédé selon l'une quelconque des revendications précédentes, **caractérisé en ce que**, pendant la procédure de cuisson, des caractéristiques du produit à cuire (25) sont déterminées ou calculées, dans lequel de préférence lesdites caractéristiques sont affichées sur une interface utilisateur (60) sous forme de déroulement de cuisson.

13. Dispositif de cuisson (10), comprenant le suivant :
- une cavité (20) pour recevoir un produit à cuire (25),
- une pluralité d'unités de chauffage (30, 40) pour chauffer le produit à cuire (25) placé dans la cavité (20), dans lequel au moins une unité de chauffage (30, 40) est sous forme d'une unité à micro-ondes (30), et
- une unité de commande (50) configurée pour exécuter un procédé selon l'une quelconque des revendications précédentes.
